(19) **Europäisches Patentamt / European Patent Office / Office européen des brevets**

(11) **EP 4 220 032 B1**

(12) **EUROPEAN PATENT SPECIFICATION**

(45) Date of publication and mention
of the grant of the patent:
**01.07.2026 Bulletin 2026/27**

(21) Application number: **22879632.2**

(22) Date of filing: **02.11.2022**

(51) International Patent Classification (IPC):
*F24S 20/20* (2018.01)    *F24S 10/50* (2018.01)
*F24S 10/55* (2018.01)    *F24S 70/60* (2018.01)
*F24S 70/65* (2018.01)    *F28F 13/08* (2006.01)
*F24S 10/70* (2018.01)    *F24S 23/77* (2018.01)
*F24S 23/30* (2018.01)    *F28D 1/04* (2006.01)
*F28F 1/34* (2006.01)

(52) Cooperative Patent Classification (CPC):
**F28F 1/34; F24S 10/502; F24S 10/55; F24S 10/72;
F24S 20/20; F24S 23/31; F24S 23/77; F24S 70/60;
F28D 1/0417;** F24S 70/65; Y02E 10/44

(86) International application number:
**PCT/ES2022/070705**

(87) International publication number:
**WO 2023/099799 (08.06.2023 Gazette 2023/23)**

(54) **SOLAR RECEIVER FORMED BY ABSORBER PANELS SUPPORTED IN COMPACT STRUCTURES**

SOLAREMPFÄNGER AUS IN KOMPAKTEN STRUKTUREN GELAGERTEN ABSORBERPLATTEN

RÉCEPTEUR SOLAIRE CONSTITUÉ DE PANNEAUX ABSORBEURS BASÉS SUR DES STRUCTURES COMPACTES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Validation States:
**MA TN**

(30) Priority: **22.12.2021 ES 202131189**

(43) Date of publication of application:
**02.08.2023 Bulletin 2023/31**

(73) Proprietors:
• **Universidad Nacional de Educación
a Distancia (UNED)
28015 Madrid (ES)**
• **Fundación IMDEA Energía
28935 Madrid (ES)**

(72) Inventors:
• **MONTES PITA, María José
28050 Madrid (ES)**
• **ROVIRA DE ANTONIO, Antonio José
28260 Madrid (ES)**
• **GONZÁLEZ AGUILAR, José
28931 Madrid (ES)**
• **ROMERO ÁLVAREZ, Manuel
28035 Madrid (ES)**

(74) Representative: **Clarke, Modet y Cía., S.L.
C/ Suero de Quiñones 34-36
28002 Madrid (ES)**

(56) References cited:
**EP-A1- 0 387 843    EP-A1- 1 980 705
WO-A2-2010/035116    CN-A- 112 856 832
FR-A1- 2 523 698    JP-A- H03 140 754
US-A- 4 038 964    US-A- 4 220 136
US-A1- 2010 206 296    US-A1- 2010 252 025
US-B1- 10 935 281**

## Description

### FIELD OF THE INVENTION

The present invention relates to concentrating solar collector receivers. A concentrating solar collector refers to a solar collector with a concentrator element that reflects or refracts solar radiation onto a receiver, which is normally located at the focus of the concentrator element. Said focus can be a point, in the case of point concentrating solar collectors, such as central tower systems or parabolic dishes.

More specifically, the present invention relates to thermal solar receiver designs, in which solar radiation is transformed into thermal energy, which is absorbed by a fluid.

Within the different configurations of solar receivers, the proposed receiver is an indirect surface absorption receiver, which means that the thermal fluid circulates through the inner space delimited by a surface on which the concentrated solar radiation is incident.

With regard to the thermal fluid used, the defined solar receiver is particularly suitable for pressurized gaseous fluids and supercritical phases. For this purpose, said solar receiver is based on compact structures similar to those used in compact heat exchangers.

### BACKGROUND OF THE INVENTION

From the point of view of heat transfer, solar receivers can be designed in three different configurations:

- Indirect surface absorption receiver: these receivers consist of a thermal fluid flowing through the inner space delimited by a primary surface, on which the concentrated solar radiation impinges, transferring the heat by conduction and later by convection to the working fluid.
- Volumetric receiver: these receivers are characterized by the concentrated solar radiation impinging directly on a porous structure of metallic or ceramic material, which heats up and in turn transfers the heat by convection to the gaseous cooling fluid (generally air). They can be atmospheric and pressurized.
- Particle receiver: in these receivers, the concentrated solar radiation directly impinges on suspended particles. Although this receiver has traditionally been used for thermochemical reactions (hydrogen), there are new projects focused on electricity production.

There are different configurations of indirect surface absorption solar receivers, depending on the primary surface on which the concentrated solar radiation is incident. Traditionally, the most widespread configuration has been the tubular receiver, in which the primary surface consists of tubes.

Tubular receivers are the most widely used in linear concentrating solar collectors, since the tubes can be placed along the focal line of these collectors, thus achieving good optical-thermal coupling. Within this typology, there are single-tube receivers, consisting of an only tube, and multi-tube receivers, in which there are several tubes. The following patents are of particular relevance in the field of tubular receivers for linear concentrating solar collectors: US 4220136 A, titled "Solar Energy Collector", which discloses a receiver consisting of a tube absorber and a flat plate absorber; US 2010/206296 A1, which describes a receiver consisting of three tubes, wherein the fluid enters the receiver through two of them of smaller diameter, and exits the receiver through a single tube of larger diameter; US 4038964 A1 which presents a receiver consisting of a flat plate absorber with circuitous tubing, and located along the apex line of a parabolic trough collector; finally, JP H03140754 A, which describes a receiver consisting of a pipe disposed at the position of the focus of a concave mirror.

Document US 10 935 281 B1 discloses a solar receiver according to the preamble of claim 1.

In the case of point concentrating solar collectors and, more specifically, for central tower systems, the tubes in the tubular receivers are arranged adjacent and parallel to each other, to form the absorber panels. Depending on these absorber panels arrangements, the following more conventional configurations can be identified:

- Cavity multi-tube receiver: the tubes are arranged to form the walls of a cavity.
- External multi-tube receiver: the tubes are arranged to form the lateral surface of a cylinder or prism.

In this last type of receiver, it is worth mentioning the international patent WO 2015/086880 "Configuration of tower solar receivers and tower with said configuration", which presents a mixed design of a central solar receiver consisting of several cavities integrated in the area comprised by the tower perimeter, in such a way that it combines the advantages of cavity receivers (lower heat losses due to convection and radiation) and external receivers (lower spillage losses). Said patent states that the cavities consist of absorber panels but does not define the design of these panels or characterize the thermal fluid circulation inside the panels.

It is important to mention that, for external multi-tube receivers, there are current designs that minimize radiation losses (light trapping geometries or sun traps). In this regard, it is worth highlighting the patents US 2019/0107311 A1 "Bladed solar thermal receivers for concentrating solar power", US 10935281 B1 "Solar thermal receivers with multi - scale light trapping geometry and features" and US 2010/0252025 A1 "Solar Receiver", which define a blade configuration of the absorber panels, with a radial or parallel arrangement. Said patent applications stipulate that the absorber panels consist of tubes, which in turn are arranged in sub-panels or passes, although the fluid circulation mode through the panels is not prescribed.

Within the indirect surface absorption receivers, a design has been developed in which the absorber panels are compact structures, especially indicated for gaseous fluids and supercritical phases. This configuration consists of using channels with a hydraulic diameter significantly smaller than that of the tubular receivers, achieving a high compactness, defined as the ratio between the heat transfer area of the structure and its total volume. In this way, the heat transfer to the thermal fluid is enhanced, which is particularly important when the thermal fluid is not a good heat transfer medium, as gaseous fluids and supercritical phases. Regarding compact structures, there are many types, as described in the patent US 5193611.

Among the compact solar receivers, the designs proposed by NREL (National Renewable Energy Laboratory) and by CERC (Clean Energy Research Center) stand out; in the first design, the compact structures forming the absorber panels are arranged in an external receiver (Sullivan et al., 2016. https://doi.org/10.2172/1333813 ); while, in the second design, the compact structures are the walls of a cavity receiver (Besarati et al., 2015. https://doi.org/10.1115/1.4029861 ). To reduce heat losses, especially when working at high temperatures, the first design uses a configuration of small quartz tubes attached perpendicular to the primary surface exposed to radiation (patented in US 2018/0195768 A1 "Systems and methods for direct thermal receivers using near blackbody configurations"); while, in the second case, a cavity is used.

There are other designs of compact solar receivers, all of which feature a compact structure that is irradiated on one side only, the opposite side being insulated to minimize heat loss (adiabatic wall); in addition, the structure presents a uniform appearance throughout the entire absorber panel, being the channels of a constant section.

**BRIEF DESCRIPTION OF THE INVENTION**

The invention is based on a solar receiver consisting of absorber panels based on compact structures, wherein the solar receiver comprises: a plurality of absorber panels, converging on an axis crossing the focal point of a point solar concentrator, so that the concentrated solar radiation from the solar concentrator, in use, is incident simultaneously on both absorber surface walls of each absorber panel, being the concentrated solar radiation flux greater on the absorber surface wall close to the focal line or focal point and gradually decreasing on said absorber surface wall as the distance to the focal line or focal point increases, wherein each absorber panel comprises at least two sub-panels throughout which a heat transfer fluid flows in a specific direction, hereinafter fluid flow passes, wherein two consecutive fluid flow passes are adjacent and are in fluid communication, wherein, in use, a thermal fluid enters the receiver through a first fluid flow pass further away from the focal line or focal point and flows through the compact structure of said first fluid flow pass, to then enter a second fluid flow pass, which is closer to the focal line or focal point, and flows through the compact structure of said second fluid flow pass, the compactness of the compact structures being constant in each fluid flow pass and increasing with respect to the previous fluid flow pass, through a decrease in the hydraulic diameter that characterizes the compact structure of this fluid flow pass, thus achieving a gradual and increasing compactness in the fluid flowing and heating direction, which corresponds to an increasing gradient of net heat flux absorbed by the absorber panel, wherein the net heat flux is the difference between the concentrated solar radiation flux incident on the absorber panel and the heat losses from both walls of said absorber panel.

Therefore, compared to the previously mentioned solar receivers in the background of the invention, this invention defines a solar receiver based on compact structures, in which there is a gradual modification of the geometric parameters of said compact structures from one fluid flow pass to another within the same absorber panel.

The hydraulic diameter is a fundamental parameter to describe the compactness of a structure, and is normally defined as follows:

$$dh = \frac{4 \cdot A_c \cdot L}{A_s}$$

(1)

In the above definition, $A_c$ is the flow area of the fluid flow pass and L is the flow length of the fluid flow pass; $A_s$ is the heat transfer surface area within that flow length fluid flow pass, L.

The compactness of a structure is measured by its surface area density, $\beta$, which is defined as the ratio between the heat transfer surface area and the total enclosed (wetted) volume of the structure:

$$\beta = \frac{A_s}{V} = \frac{4 \cdot \sigma}{dh}$$

<div align="right">(2)</div>

As observed in the previous equation, if the surface porosity term is introduced, $\sigma$, the surface area density, $\beta$, and the hydraulic diameter, dh, are inversely linked, so that a decrease in hydraulic diameter causes an increase in compactness, and vice versa.

The invention sets a minimum value for the compactness increase of a fluid flow pass with respect to the previous fluid flow pass. The hydraulic diameter reduction to increase the compactness in the successive fluid flow passes of the thermal fluid through the absorber panel is carried out in such a way that the convection heat transfer coefficient of between the compact structure and the thermal fluid increases, at least, by the same proportion that increases, for that fluid flow pass, the net heat flux, referred to the absorber surface wall corresponding to said fluid flow pass of the thermal fluid.

This limit is a minimum value that is set so that the temperature difference between the irradiated absorber surface wall and the thermal fluid flowing through the channels adjacent to that wall, remains constant throughout the panel, although the temperature increases as the net heat flux gradient in the absorber panel increases.

According to Newton's law of cooling, assuming that the irradiated absorber surface wall is thin enough to be characterised by a single temperature, we have that the net heat flux $\dot{q}_{net,paso,i}$ absorbed by the absorber panel, for a fluid flow pass, is transferred to the thermal fluid as follows:

$$\dot{q}_{net,pass,i} = \frac{\dot{Q}_{net,pass,i}}{A_{pass,i}} \cong h_{conv,pass,i} \cdot \left(T_{wall,pass,i} - T_{fluid,pass,i}\right)$$

<div align="right">(3)</div>

In the previous equation it is observed that the convection coefficient $h_{conv,pass,i}$ is, approximately, the constant of proportionality between the net heat flux and the temperature difference between the irradiated absorber surface wall and the thermal fluid circulating through the channels row adjacent to said irradiated wall. Therefore, to keep this difference constant, the invention defines that the convection coefficient increases, from one fluid flow pass with respect to the previous fluid flow pass, in the same proportion as the net heat flux increases between those two consecutive fluid flow passes. The gradual compactness increase has a double advantage:

- It allows better cooling of the absorber panel in its most irradiated zone, improving the heat transfer to the fluid and overcoming the limitation on heat absorption by the fluid as its temperature increases.
- It makes it possible to keep a more moderate velocity in the less irradiated area of the absorber panel, that is, the area that requires less cooling. With this, it is possible not to excessively increase the fluid pressure drop, which depends on the square of its velocity.

In contrast to the solar receivers based on compact structures that have been mentioned in the background of the invention, this invention also stipulates that the absorber panels are arranged so that the concentrated solar radiation flux is incident on both sides of the absorber panel, with the aim of reducing the thermal gradient through the thickness of the compact structure in the absorber panel. This, which is not so important in tubular receivers, is crucial for absorber panels based on compact structures, since the thermal gradient between parallel channels along the thickness of the compact structure is reduced, compared to an absorber panel in which the concentrated solar radiation is incident only on one side.

This arrangement is valid both when the absorber panel is located along the focal line of linear solar concentrators, and when the absorber panels are arranged at the focal point of point solar concentrators. Although any type of linear or point solar concentrator is valid, the invention is very well adapted to central tower systems.

The invention also takes into account the boundary conditions affecting the absorber panels, and prescribes that the net heat flux over each of the panels has an increasing gradient in the direction of fluid heating and flowing.

In central tower systems, the invention defines a design in which there are two or more absorber panels converging on the tower axis, in such a way that both sides of the absorber panels receive concentrated solar radiation from a circular heliostats field, prescribing that each absorber panel presents an increasing gradient of the net heat flux from the panel area close to the perimeter of the tower, through which the thermal fluid enters, towards the panel area close to the tower axis, through which the thermal fluid leaves, at the target temperature, after flowing through several passes along the absorber panel. Although the invention specifies that the minimum number of absorber panels is two, if it is necessary to create a cavity effect to reduce thermal losses, the minimum number of absorber panels is equal to three, since, in this case, for every two consecutive and converging absorbers panels, a prismatic cavity is formed.

The defined solar receiver consists of absorber panels based on compact structures, similar to those used in compact heat exchangers. It is valid for any compact geometry, provided that its compactness increases in the successive fluid flow passes through which the thermal fluid flows along the same absorber panel.

The invention specifies that compact structures are especially suitable for pressurised gases and supercritical phases, since they achieve a significant improvement in heat transfer to the thermal fluid, while, with a suitable design, they allow working at high pressures of the thermal fluid. Specifically, the compact structure type PFHE (*Plate Fin Heat Exchanger*), formed by alternate layers of plates and fin arrangements; if the layers of such a structure are bonded by diffusion, the working pressures can be high, including supercritical pressures. In addition, it is specified that different designs of the fin arrangement can be combined for the different fluid flow passes in the same absorber panel, the most common being plain, louvered or perforated fins; with triangular or rectangular arrangement; of straight or zig-zag channel.

## BRIEF DESCRIPTION OF THE FIGURES

In order to illustrate the description herein and in order to assist a better understanding of the features of the invention, a set of figures is attached hereto as an integral part of said description, in which the following is shown for illustrative and non-limiting purposes:

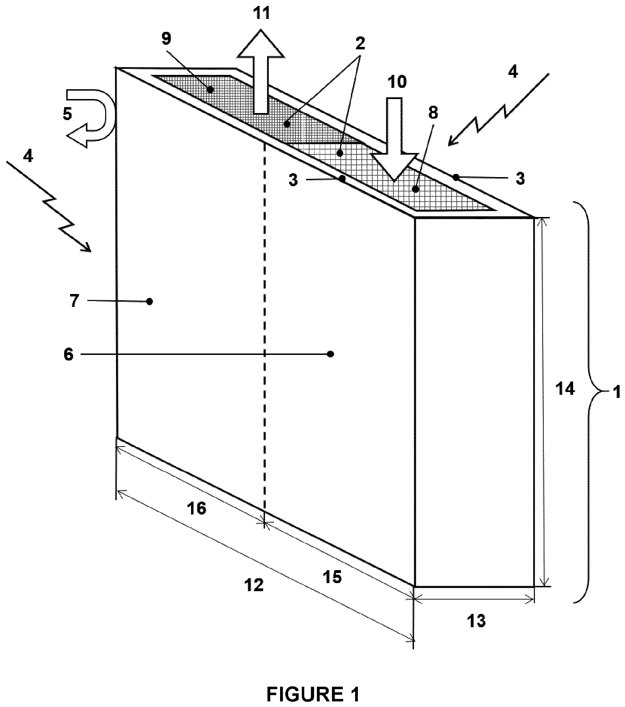

- Figure 1. Absorber panel based on a compact structure of gradual and increasing compactness in the fluid flowing and heating direction, which is coincident to an increasing net absorbed heat flux gradient, the panel being arranged in such a way that it receives concentrated solar radiation on both sides (case 2 fluid flow passes).

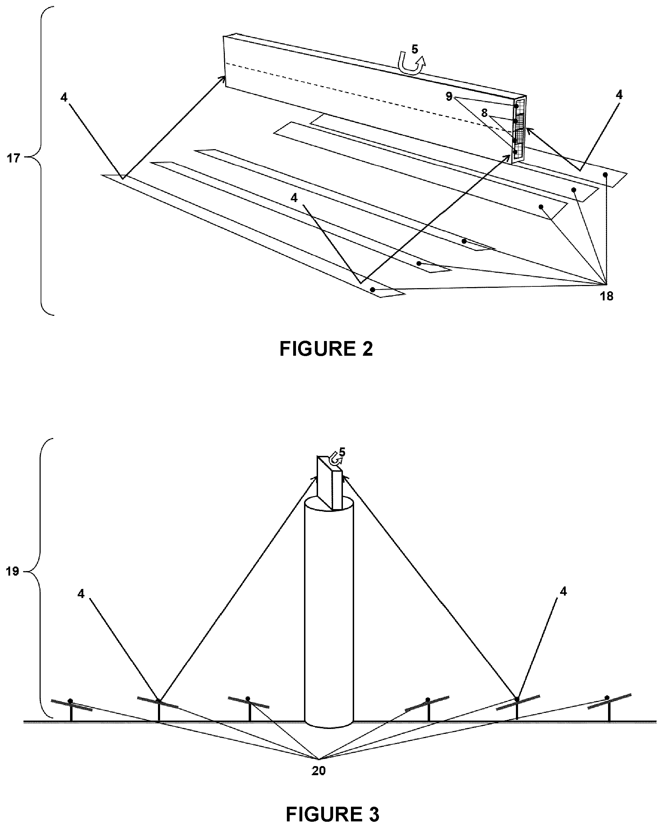

- Figure 2. Solar receiver for linear Fresnel system not part of the present invention, consisting of 2 absorber panels of gradual compactness, converging at the focal line and at an angle of 180°, in such a way that said absorber panels receive concentrated solar radiation on both sides (case 2 fluid flow passes).
- Figure 3. Solar receiver for central tower system, consisting of 2 absorber panels of gradual compactness, converging on the tower axis, in such a way that said absorber panels receive concentrated solar radiation on both sides.
- Figure 4. Perspective view of a solar receiver for a central tower system, consisting of gradual compactness absorber panels, in such a way that the absorber panels receive concentrated solar radiation on both sides, for which they are arranged in a radial configuration (case: 5 absorber panels and 2 fluid flow passes).

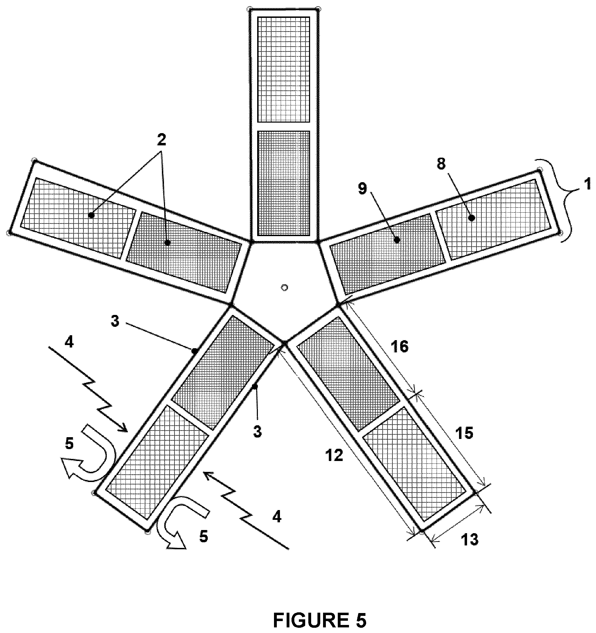

- Figure 5. Top view of a solar receiver for the central tower system, consisting of absorber panels of gradual compactness, in such a way that the absorber panels receive concentrated solar radiation on both sides, for which they are arranged in a radial configuration (case: 5 absorber panels and 2 fluid flow passes).
- Figure 6. Top view of one of the prismatic cavities formed by 2 consecutive and converging panels, distinguishing in the same absorber panel different fluid flow passes with increasing compactness towards inside the cavity (case: 2 fluid flow passes).
- Figure 7. Projected view of one of the triangular cavities formed by 2 consecutive and converging panels, distinguishing in the same absorber panel different fluid flow passes with increasing compactness towards inside the cavity (case: 2 fluid flow passes).
- Figure 8. Top view and dimensions of each of the channels in each of the passes through which the fluid flows throughout the panel with gradual compactness (case: 5 absorber panels, 2 fluid flow passes and quadrangular channels).

In order to better understand the figures of the invention, and their detailed description, the most relevant elements involved in and the invention, which are represented in the figures that integrate the invention are listed below.

1 = Absorber panel
2 = Compact structure
3 = Absorber surface walls on which the concentrated solar radiation is incident
4 = Concentrated solar radiation
5 = Heat losses (by radiation, convection and reflection)
6 = Fluid flow pass 1 (case 2 fluid flow passes)
7 = Fluid flow pass 2 (case 2 fluid flow passes)
8 = Compact structure of fluid flow pass 1 (case 2 fluid flow passes)
9 = Compact structure of fluid flow pass 2 (case 2 fluid flow passes)
10 = Thermal fluid inlet to the absorber panel, at cold temperature
11 = Thermal fluid outlet from the absorber panel, at target temperature
12 = Absorber panel width
13 = Absorber panel thickness
14 = Absorber panel height

15 = Absorber panel width corresponding to fluid flow pass 1 (case 2 fluid flow passes)

16 = Absorber panel width corresponding to fluid flow pass 2 (case 2 fluid flow passes)

17 = Linear concentrating solar collector (case linear Fresnel system)

18 = Primary mirrors field of linear concentrating solar collector

19 = Point concentrating solar collector (case central tower system)

20 = Primary mirrors field of point concentrating solar collector

21 = Cavity aperture

22 = Circulation of the thermal fluid for each of the panels (case 2 fluid flow passes)

23 = Side of the quadrangular channel through which the thermal fluid flows in fluid flow pass 1 (case 2 fluid flow passes and quadrangular channels)

24 = Side of the quadrangular channel through which the thermal fluid flows in fluid flow pass 2 (case 2 fluid flow passes and quadrangular channels)

## PREFERRED EMBODIMENT OF THE INVENTION

The present invention is further illustrated by the following example, which is not intended to be limiting in scope.

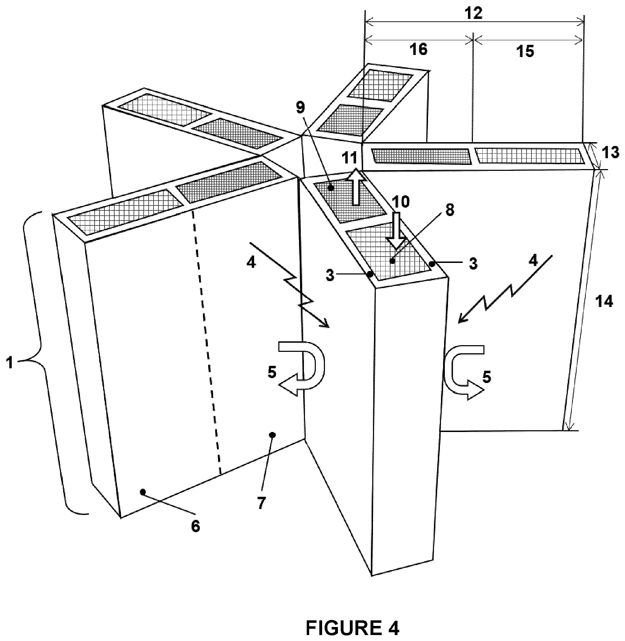

A central solar receiver is considered, consisting of 5 absorber panels (1) based on compact structures (2), of gradual compactness, arranged so that concentrated solar radiation (4) is incident on both absorber surface walls (3) of the absorber panel (1), being the preferred configuration the radii of a circumference whose diameter coincides with the diameter of the central tower, in such a way that the absorber panels (1) extend from the centre of the circumference to the vertices of a regular pentagon, as illustrated in figure 4, forming triangular-based prismatic cavities between two consecutive and converging absorber panels (1).

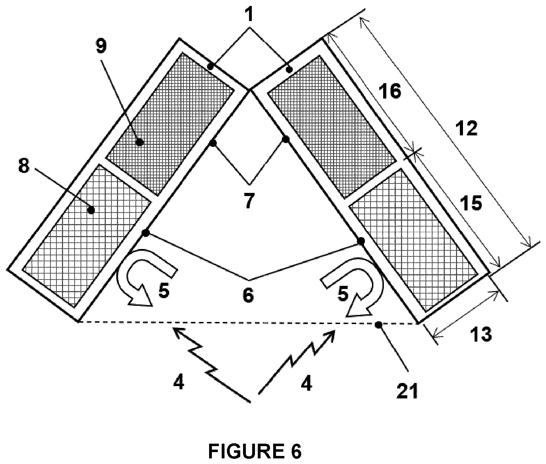

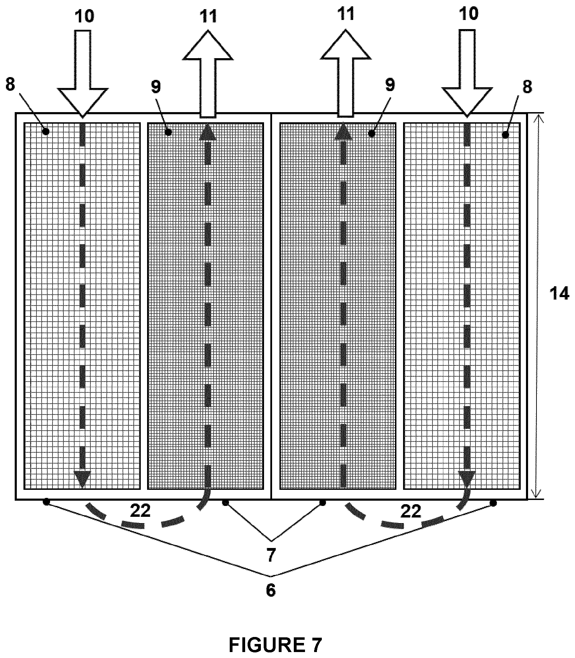

Within the same absorber panel (1), it is considered the simplest case in which there are only two fluid flow passes, called fluid flow pass 1 (6) and fluid flow pass 2 (7), in the fluid direction from the outer zone of the absorber panel (1), close to the perimeter of the tower, to the inner zone of the absorber panel (1) close to the tower axis, in such a way that fluid flow pass 2 (7) has a greater compactness than fluid flow pass 1 (6), the coldest fluid (10) entering through fluid flow pass 1 (6) then exiting the receiver at the target temperature (11) through fluid flow pass 2 (7). It is specified that said fluid flow passes have the same vertical height (14), and the same thickness (13), which matches to the height (14) and thickness (13) of the absorber panel (1), but they do not have the same width (15 and 16), since it will depend on how the specific design of each fluid flow pass is made to adapt it to the gradual compactness that is required in the invention. These dimensions are specified in figures 6 and 7, which show, respectively, the top view and the projected view of the triangular-based prismatic cavity formed by two consecutive and converging absorber panels (1).

As defined in the brief description of the invention, with an adequate pointing strategy towards the centre of the triangular-based prismatic cavity, the map of concentrated solar radiation (4) has an increasing gradient from fluid flow pass 1 (6) towards fluid flow pass 2 (7), that is, the concentrated solar radiation (4) integrated for the entire absorber surface corresponding to fluid flow pass 2 (7) is greater than the concentrated solar radiation (4) integrated for the entire absorber surface corresponding to fluid flow pass 1 (6).

Regarding the heat losses (5), the triangular-based prismatic cavity presents a favorable peculiarity when compared to conventional cavities with a greater number of absorber panels; for the specific case of 2 passes defined above, fluid flow pass 2 (7) presents greater attenuation of radiation heat losses because of a lower view factor, $F_{view}$, compared to the fluid flow pass 1 (6). The view factor is calculated by a complex geometric calculation and it is a measure of the thermal radiation that leaves one surface and impinges on another, so, intuitively, the radiation heat losses will be affected by the view factor from said surface to the cavity aperture (21), with this view factor increasing as the surface is more faced to said aperture. Figure 6 shows that the absorber surface area corresponding to fluid flow pass 2 (7) is less faced to the cavity aperture (21) than that corresponding to fluid flow pass 1 (6).

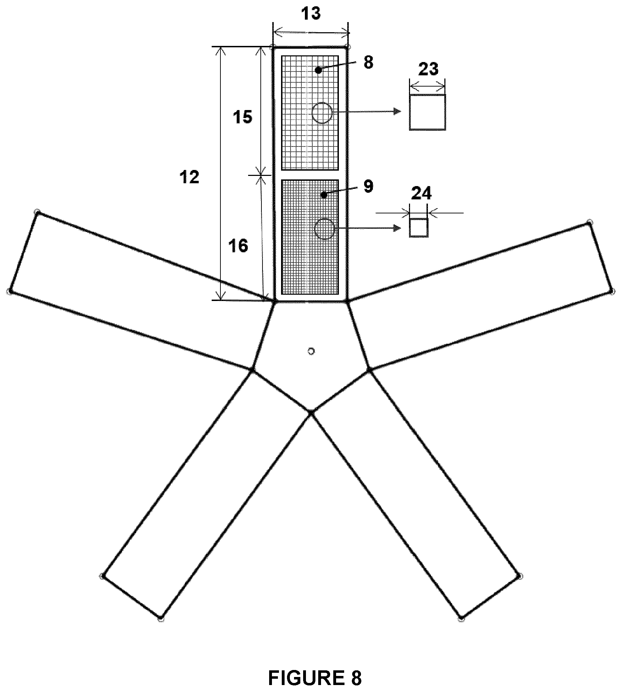

Regarding the compact structure (2), although the invention is valid for any type of compact structure, the simplest case is considered within the PFHE type (plate-fin heat exchanger), that is, a structure formed by a plain rectangular fin arrangement between two plates, in such a way that there are quadrangular-shaped channels in each fluid flow pass. The main geometric parameters of said compact structure with quadrangular channels are specified in figure 8.

According to the gradual compactness defined in present invention, the flow area of the channels in fluid flow pass 2 (7), hereinafter $A_{c2}$, is smaller than in the fluid flow pass 1 (6), hereinafter $A_{c1}$, so that the side of the quadrangular channel through which the thermal fluid flows in fluid flow pass 2 (24), hereinafter $l_{c2}$, is smaller than the side of the quadrangular channel through which the thermal fluid flows in fluid flow pass 1 (23), hereinafter $l_{c1}$. For calculations of subsequent thermo-hydraulics, the hydraulic diameter is used, defined in the brief description of the invention, equation (1). As in this specific case there are straight channels, the hydraulic diameter can be simplified as follows:

$$dh = \frac{4 \cdot A_c \cdot L}{A_s} = \frac{4 \cdot A_c \cdot L}{P_m \cdot L} = \frac{4 \cdot A_c}{P_m}$$

$$(1bis)$$

In the above definition, $P_m$ is the wetted perimeter of the channel.

For the specific case of quadrangular channels, the hydraulic diameter is equal to the channel side, as observed in the following equations.

$$A_{c1} = l_{c1}{}^2$$
$$A_{c2} = l_{c2}{}^2$$
$$A_{c2} < A_{c1}$$

$$(3)$$

$$dh_{c1} = \frac{4 \cdot A_{c1}}{P_{m1}} = \frac{4 \cdot l_{c1}{}^2}{4 \cdot l_{c1}} = l_{c1}$$

$$dh_{c2} = \frac{4 \cdot A_{c2}}{P_{m2}} = \frac{4 \cdot l_{c2}{}^2}{4 \cdot l_{c2}} = l_{c2}$$

$$dh_{c2} < dh_{c1}$$

$$(4)$$

It is considered that the gradual compactness solar receiver is integrated into a solar thermal power plant coupled to a power cycle that demands a thermal power in nominal conditions, hereinafter $\dot{Q}_{th,PB}$. Said cycle determines the fluid inlet / outlet temperature at the receiver inlet / outlet, hereinafter $T_{fluid,inlet}$ and $T_{fluid,outlet}$, and its pressure at the receiver outlet, $P_{fluid,outlet}$, in case of a direct coupling. It is also considered that the solar thermal power plant has a solar multiple SM, which is defined as the ratio between the thermal power produced by the solar field under design point conditions, and the thermal power required by the power cycle under nominal conditions. This solar multiple is usually greater than one and close to two, in such a way that the thermal energy surplus is stored for later use, providing the plant of some dispatchability.

Therefore, the net heat provided by the solar receiver at design point conditions $\dot{Q}_{net,rec}$ is defined as follows:

$$\dot{Q}_{net,rec} = SM \cdot \dot{Q}_{th,PB}$$

$$(5)$$

It is considered that, with a suitable pointing strategy, the solar flux map on the absorber surface follows a pattern that 40% of the net heat is absorbed by fluid flow pass 1 (6), while 60% of the net heat is absorbed by fluid flow pass 2 (7), which is equivalent to a value of 1.5 for the ratio between the net heat gain of fluid flow pass 2 (7) and the net heat gain of fluid flow pass 1 (6).

$$\dot{Q}_{net,pass1} = 0.4 \cdot \dot{Q}_{net,receiver}$$

$$\dot{Q}_{net,pas2} = 0.6 \cdot \dot{Q}_{net,receiver}$$

$$\frac{\dot{Q}_{net,pass2}}{\dot{Q}_{net,pass1}} = \frac{0.6}{0.4} = 1.5$$

$$(6)$$

The total thermal fluid mass flowing through the solar receiver at design point conditions, $\dot{m}_{fluid}$, is defined once the previous conditions of thermal power and the fluid thermodynamic properties at the receiver inlet and outlet have been established, which must match to those at the inlet and outlet for each absorber panel (1) of the solar receiver. In general, these properties are fluid temperature and pressure at the inlet ($T_{fluid,inlet}$ and $P_{fluid,inlet}$) and outlet ($T_{fluid,outlet}$ and $P_{fluid,outlet}$) of the absorber panel (1), in order to determine the remaining thermodynamic variables: fluid enthalpy at the inlet and outlet of the absorber panel (1): $h_{fluid,inlet}$ and $h_{fluid,outlet}$; fluid specific heat at the inlet and outlet of the absorber panel (1): $cp_{fluid,inlet}$ and $cp_{fluid,outlet}$; fluid thermal conductivity at the inlet and outlet of the absorber panel (1): $k_{fluid,inlet}$ and $k_{fluid,outlet}$; and fluid dynamic viscosity at the inlet and outlet of the absorber panel (1): $\mu_{fluid,inlet}$ and $\mu_{fluid,outlet}$. In this way, the total mass flow of the thermal fluid flowing through the solar receiver under design point conditions is:

$$\dot{m}_{fluid} = \frac{SM \cdot \dot{Q}_{th,PB}}{\left(h_{fluid,outlet} - h_{fluid,inlet}\right)}$$

(7)

In the same way, since the number of absorber panels (1) is known, $N_{panels}$, which configure the central solar receiver, it is possible to know the mass flow circulating through each one of the absorber panels (1), hereinafter $\dot{m}_{fluid,panel}$:

$$\dot{m}_{fluid,panel} = \frac{\dot{m}_{fluid}}{N_{panels}}$$

(8)

Once the total mass flow circulating through each absorber panel (1) of the receiver is known, and also the net heat absorbed by the absorber surface corresponding to each fluid flow pass in a same panel, it is possible to calculate the thermodynamic properties of the fluid at the outlet of the fluid flow pass 1 (6) and at the inlet of fluid flow pass 2 (7). With this, it is possible to calculate the average thermodynamic properties of the thermal fluid in each of the fluid flow passes; knowing the average fluid properties, and the channels geometry and dimensions in each fluid flow pass, an average value of the convection heat transfer coefficient can be calculated for the fluid flow pass 1 (6), hereinafter $h_{conv1\_gradual\_compactness}$, and for the fluid flow pass 2 (7), hereinafter $h_{conv2\_gradual\_compactness}$.

As prescribed in present invention, fluid flow pass 2 (7) has a greater compactness, with which the convection coefficient increases by at least 1.5 with respect to fluid flow pass 1 (6). This implies that the channels of the fluid flow pass 2 (7) must be smaller than those of the fluid flow pass 1 (6). This decrease in the geometric parameters does not follow the proportion of 1.5, since other factors affect the convection heat transfer coefficient, such as the Reynolds number, which is related to the turbulence of the fluid and increases with increasing velocity, which is achieved mainly by reducing the channel dimensions.

$$\frac{h_{conv2\_gradual\_compactness}}{h_{conv1\_gradual\_compactness}} = 1.5$$

(9)

The gradual compactness effect can be observed if, for comparison, an absorber panel with the same characteristics as the panel being analyzed in this detailed description of the invention is considered, hereinafter gradual compactness absorber panel, but based on a compact structure of constant compactness, hereinafter, constant compactness absorber panel. Said constant compactness is considered to be equal to that of fluid flow pass 1 (6), in such a way that the average value of the convection heat transfer coefficient in fluid flow pass 1 is the same for both panels, while the average value of the convection heat transfer coefficient in fluid flow pass 2 of the constant compactness absorber panel is even lower than the convection heat transfer coefficient in fluid flow pass 1 of the gradual compactness absorber panel, since, as the thermal fluid heats up, it will cool worse. Mathematically it would be as follows:

$$h_{conv1\_constant\_compactness} = h_{conv1\_gradual\_compactness}$$

$$h_{conv2\_constant\_comapctness} < h_{conv1\_constant\_compactness}$$

$$h_{conv2\_constant\_compactness} \ll h_{conv2\_gradual\_compactness}$$

(10)

The higher convection heat transfer coefficient of fluid flow pass 2, compared to fluid flow pass 1, in the gradual compactness absorber panel, yields to better cooling of this absorber panel, compared to the constant compactness absorber panel, mainly in the absorber surface area corresponding to fluid flow pass 2, which is the most irradiated area and the one that requires a better cooling.

In a very simplified way, it can be said that, for each fluid flow pass, the global heat transfer coefficient, hereinafter $U_{pass,i}$, between the absorber surface temperature, $T_{s,pass,i}$ and the fluid bulk temperature $T_{fluid,pass,i}$ through the channels in the first row, adjacent to the irradiated absorber surface wall, is calculated with an expression similar to the following:

$$U_{pass,i} \cong \frac{1}{\frac{1}{h_{conv,pass,i}} + \frac{t_{pass,i}}{k_{rec}}}$$

$$(11)$$

In the above equation, $t_{pass,i}$ is the thickness of the first plate of the compact structure and $k_{rec}$ is the thermal conductivity of this plate material. The first term in the denominator of the above equation represents the convection thermal resistance, while the second term represents the conduction thermal resistance through the plate thickness. For conventional values in the cooling conditions of solar receivers, the limiting factor is usually the convection thermal resistance, so that an improvement or increase in the convection coefficient results in an increase in the global heat transfer coefficient.

The higher the global heat transfer coefficient, the lower the thermal gradient between the external absorber surface temperature and the fluid temperature, which yields to a lower external absorber surface temperature of the wall on which the concentrated solar radiation (2) is incident.

$$\dot{Q}_{net,pass,i} = U_{pass,i} \cdot A_{pass,i} \cdot \left(T_{s,pass,i} - T_{fluid,pass,i}\right)$$

$$T_{s,pass,i} = T_{fluid,pass,i} + \dot{Q}_{net,pass,i} \Big/ U_{pass,i} \cdot A_{pass,i}$$

$$(12)$$

This lower surface temperature of the absorber panel (1) means lower heat losses (5) of the central solar receiver, $\dot{Q}_{loss,rec}$, since said heat losses (5) depend directly on the surface temperature. The lower heat losses contribute to improving the thermal performance of the central solar receiver, hereinafter $\eta_{rec}$.

$$\eta_{rec} = \frac{\dot{Q}_{inc,rec} - \dot{Q}_{loss,rec}}{\dot{Q}_{inc,rec}}$$

$$(13)$$

Regarding the fluid pressure, although the pressure drop increases as the compactness of the compact structure increases in successive fluid flow passes, this increase is gradual and always lower than that which would occur in a structure of constant compactness, equal to that of the fluid flow pass of greater compactness of the solar receiver of gradual compactness defined in this invention.

Finally, the invention prescribes that the absorber panel (1) is irradiated on both sides, since in this way the thermal gradient through the thickness (13) of the compact structure (2) in the absorber panel (1) is reduced. This temperature gradient implies less fluid heating as it circulates through parallel rows further away from the absorber surface wall (3). A non-homogeneous fluid heating in parallel rows implies that it is necessary to heat more so that the mixture gets the target temperature, increasing the surface temperature of the absorber panels (1) and, therefore, the heat losses (5). Therefore, any reduction in the thermal gradient through the thickness (13) of the compact structure (2) will mean an improvement in the receiver thermal performance.

It is again emphasized that all the above considerations referring to: number of absorber panels (1), number of fluid flow passes within the same panel, net heat flux absorbed by the panel surface corresponding to each fluid flow pass, type of compact structure (2), type of thermal fluid and solar thermal power plant in which the receiver is integrated, are not limiting the scope of the invention, but have been necessary for a detailed description of the invention.

**Claims**

1. Solar receiver wherein the solar receiver comprises:

a plurality of absorber panels (1) based on compact structures (2), the absorber panels (1) converging on an axis crossing the focal point of a point solar concentrator (19), so that the concentrated solar radiation (4) from the solar concentrator, in use, is incident simultaneously on both absorber surface walls (3) of each absorber panel (1), being the concentrated solar radiation flux (4) greater on the absorber surface wall (3) of the absorber panel (1) close to the focal line or focal point and gradually decreasing on said absorber surface wall (3) as the distance to the focal line or focal point increases, wherein each absorber panel (1) comprises at least two sub-panels throughout which a heat transfer fluid flows in a specific direction, hereinafter fluid flow passes, wherein two consecutive passes are adjacent and are in fluid communication, wherein, in use, a thermal fluid enters the receiver through a first fluid flow pass (6) further away from the focal line or focal point and flows through the compact structure (8) of said first fluid flow pass (6), to then enter a second fluid flow pass (7) closer to the focal line or focal point, and flows through the compact structure (9) of said second fluid flow pass (7),
**characterized in that**
the compactness of the compact structures being constant in each fluid flow pass and increasing with respect to the previous fluid flow pass, by means of a decrease in the hydraulic diameter that characterizes the compact structure **in that** fluid flow pass, thus achieving a gradual and increasing compactness in the fluid flowing and heating direction, which corresponds to an increasing gradient of net heat flux absorbed by the absorber panel (1), wherein the net heat flux is the difference between the concentrated solar radiation flux (4) incident on the absorber panel (1) and the heat losses (5) from both absorber surface walls (3) of said absorber panel (1).

2. Solar receiver according to claim 1, wherein there are at least two or more absorber panels (1) converging on the tower axis crossing the focal point of a central tower system (19), wherein, in use, the concentrated solar radiation (4) from the primary mirrors field of the central tower system (20), is greater in the zone of the absorber surface wall (3) of the absorber panel (1) close to the tower axis crossing the focal point, and gradually decreases as the distance from said axis increases, so that each absorber panel (1) presents an increasing gradient of the net heat flux from the zone of the panel located at a greater distance from the tower axis, wherein a thermal fluid enters at a cold temperature (10), towards the zone of the panel close to the tower axis, through which said thermal fluid exits, at the target temperature (11), after having circulated through a number of fluid flow passes along the absorber panel (1).

3. Solar receiver according to claim 1, wherein the thermal fluid is a pressurized gas or a supercritical phase, circulating through the compact structure (2), formed by alternate layers of plates and fin arrangements, said layers being bonded by diffusion and allowing different designs of the fin arrangement to be combined for the different fluid flow passes in the same absorber panel (1).

**Patentansprüche**

1. Solarempfänger, wobei der Solarempfänger umfasst:

eine Vielzahl von Absorberpaneelen (1), die auf kompakten Strukturen (2) basieren, wobei die Absorberpaneele (1) auf einer Achse konvergieren, die den Brennpunkt eines punktförmigen Solarkonzentrators (19) schneidet, sodass die konzentrierte Solarstrahlung (4) des Solarkonzentrators im Betrieb gleichzeitig auf beide Absorberoberflächenwände (3) jedes Absorberpaneels (1) auftrifft, wobei der konzentrierte Solarstrahlungsfluss (4) auf der Absorberoberflächenwand (3) des Absorberpaneels (1) nahe dem Brennpunkt größer ist und auf besagter Absorberoberflächenwand (3) allmählich abnimmt, wenn der Abstand zum Brennpunkt zunimmt, wobei jedes Absorberpaneel (1) mindestens zwei Teilpaneele umfasst, durch die ein Wärmeträgerfluid in einer spezifischen Richtung strömt, nachfolgend als Fluiddurchgänge bezeichnet, wobei zwei aufeinanderfolgende Fluiddurchgänge benachbart sind und fluidisch miteinander in Verbindung stehen, wobei im Betrieb ein thermisches Fluid durch einen ersten Fluiddurchgang (6), der weiter vom Brennpunkt entfernt ist, in den Solarempfänger eintritt und durch die kompakte Struktur (8) des besagten ersten Fluiddurchgangs (6) strömt, um anschließend in einen zweiten Fluiddurchgang (7), der näher am Brennpunkt liegt, einzutreten und durch die kompakte Struktur (9) des besagten zweiten Fluiddurchgangs (7) zu strömen,
**dadurch gekennzeichnet, dass**
die Kompaktheit der kompakten Strukturen in jedem Fluiddurchgang konstant ist und gegenüber dem vorhergehenden Fluiddurchgang zunimmt, mittels einer Verringerung des hydraulischen Durchmessers, der die kompakte Struktur in jenem Fluiddurchgang charakterisiert, wodurch eine graduell zunehmende Kompaktheit in der Fluidströmungs- und Erwärmungsrichtung erreicht wird, die einem zunehmenden Gradienten des vom Absorberpaneel (1) absorbierten Netto-Wärmestroms entspricht, wobei der Netto-Wärmestrom die Differenz zwischen dem auf das Absorberpaneel (1) einfallenden konzentrierten Solarstrahlungsfluss (4) und den Wärmeverlusten (5) von beiden Absorberoberflächenwänden (3) des besagten Absorberpaneels (1) ist.

2. Solarempfänger nach Anspruch 1, wobei mindestens zwei oder mehr Absorberpaneele (1) auf der Turmachse konvergieren, die den Brennpunkt eines Zentralturmsystems (19) schneidet, wobei im Betrieb die konzentrierte Solarstrahlung (4) aus dem Primärspiegelfeld des Zentralturmsystems (20) in dem Bereich der Absorberoberflächenwand (3) des Absorberpaneels (1) nahe der den Brennpunkt schneidenden Turmachse größer ist und allmählich abnimmt, wenn der Abstand zu besagter Achse zunimmt, sodass jedes Absorberpaneel (1) einen zunehmenden Gradienten des Netto-Wärmestroms von dem Bereich des Paneels aufweist, der in größerer Entfernung von der Turmachse liegt, wobei ein thermisches Fluid mit einer kalten Temperatur (10) zu dem Bereich des Paneels nahe der Turmachse eintritt, durch welchen das thermische Fluid nach dem Durchströmen einer Anzahl von Fluiddurchgängen entlang des Absorberpaneels (1) mit der Zieltemperatur (11) austritt.

3. Solarempfänger nach Anspruch 1, wobei das thermische Fluid ein unter Druck stehendes Gas oder eine superkritische Phase ist, die durch die kompakte Struktur (2) strömt, die aus alternierenden Schichten von Platten und Rippenanordnungen gebildet ist, wobei die besagten Schichten diffusionsgebondet sind und ermöglichen, dass unterschiedliche Rippenanordnungen für die unterschiedlichen Fluiddurchgänge in demselben Absorberpaneel (1) kombiniert werden.

## Revendications

1. Récepteur solaire dans lequel le récepteur solaire comprend :

une pluralité de panneaux absorbeurs (1) basés sur des structures compactes (2), les panneaux absorbeurs (1) convergeant sur un axe traversant le point focal d'un concentrateur solaire ponctuel (19), de telle sorte que le rayonnement solaire concentré (4) provenant du concentrateur solaire est, en utilisation, incident simultanément sur les deux parois de surface absorbante (3) de chaque panneau absorbeur (1), le flux de rayonnement solaire concentré (4) étant plus élevé sur la paroi de surface absorbante (3) du panneau absorbeur (1) proche du point focal et diminuant progressivement sur ladite paroi de surface absorbante (3) à mesure que la distance au point focal augmente, chaque panneau absorbeur (1) comprenant au moins deux sous-panneaux à travers lesquels un fluide caloporteur s'écoule dans une direction spécifique, ci-après dénommées passes de fluide, deux passes consécutives étant adjacentes et en communication fluidique, dans lequel, en utilisation, un fluide thermique pénètre dans le récepteur par une première passe de fluide (6) plus éloignée du point focal et s'écoule à travers la structure compacte (8) de ladite première passe de fluide (6), puis pénètre dans une seconde passe de fluide (7) plus proche du point focal, et s'écoule à travers la structure compacte (9) de ladite seconde passe de fluide (7), **caractérisé en ce que**
la compacité des structures compactes est constante dans chaque passe de fluide et augmente par rapport à la passe de fluide précédente, au moyen d'une diminution du diamètre hydraulique caractérisant la structure compacte dans cette passe de fluide, permettant ainsi d'obtenir une compacité graduellement croissante dans la direction d'écoulement et de chauffage du fluide, correspondant à un gradient croissant du flux thermique net absorbé par le panneau absorbeur (1), dans lequel le flux thermique net est la différence entre le flux de rayonnement solaire concentré (4) incident sur le panneau absorbeur (1) et les pertes thermiques (5) provenant des deux parois de surface absorbante (3) dudit panneau absorbeur (1).

2. Récepteur solaire selon la revendication 1, dans lequel il y a au moins deux panneaux absorbeurs ou plus (1) convergeant sur l'axe de la tour traversant le point focal d'un système à tour centrale (19), dans lequel, en utilisation, le rayonnement solaire concentré (4) provenant du champ de miroirs primaires du système à tour centrale (20) est plus élevé dans la zone de la paroi de surface absorbante (3) du panneau absorbeur (1) proche de l'axe de la tour traversant le point focal, et diminue progressivement à mesure que la distance audit axe augmente, de telle sorte que chaque panneau absorbeur (1) présente un gradient croissant du flux thermique net depuis la zone du panneau située à une distance plus grande de l'axe de la tour, dans lequel un fluide thermique pénètre à une température froide (10) vers la zone du panneau proche de l'axe de la tour, par laquelle ledit fluide thermique sort à la température cible (11), après avoir circulé à travers un certain nombre de passes de fluide le long du panneau absorbeur (1).

3.  Récepteur solaire selon la revendication 1, dans lequel le fluide thermique est un gaz sous pression ou une phase supercritique, circulant à travers la structure compacte (2), formée par des couches alternées de plaques et d'agencements d'ailettes, lesdites couches étant assemblées par diffusion et permettant de combiner différentes conceptions d'agencements d'ailettes pour les différentes passes de fluide dans le même panneau absorbeur (1).

**FIGURE 1**

**FIGURE 2**

**FIGURE 3**

**FIGURE 4**

**FIGURE 5**

**FIGURE 6**

**FIGURE 7**

FIGURE 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4220136 A
- US 2010206296 A1
- US 4038964 A1
- JP H03140754 A
- US 10935281 B1

- WO 2015086880 A
- US 20190107311 A1
- US 20100252025 A1
- US 5193611 A
- US 20180195768 A1